Europäisches Patentamt

(19) European Patent Office

Office européen des brevets

(11) EP 0 866 330 A2

(12) EUROPEAN PATENT APPLICATION

(43) Date of publication:
23.09.1998 Bulletin 1998/39

(51) Int. Cl.⁶: G01N 21/55

(21) Application number: 98104170.0

(22) Date of filing: 09.03.1998

(84) Designated Contracting States:
AT BE CH DE DK ES FI FR GB GR IE IT LI LU MC
NL PT SE
Designated Extension States:
AL LT LV MK RO SI

(30) Priority: 21.03.1997 JP 68616/97

(71) Applicant:
NIPPON SHEET GLASS CO., LTD.
Osaka-shi, Osaka 541 (JP)

(72) Inventors:
• Tanaka, Shuhei,
c/o Nippon Sheet Glass Co., Ltd.
Osaka-shi, Osaka (JP)
• Koyama, Tadashi,
c/o Nippon Sheet Glass Co., Ltd.
Osaka-shi, Osaka (JP)

• Tsunetomo, Keiji,
c/o Nippon Sheet Glass Co., Ltd.
Osaka-shi, Osaka (JP)
• Murakami, Harunori,
Nippon Sheet Glass Co., Ltd.
Osaka-shi, Osaka (JP)
• Imanishi, Hideki,
Nippon Sheet Glass Co., Ltd.
Osaka-shi, Osaka (JP)

(74) Representative:
Hering, Hartmut, Dipl.-Ing.
Patentanwälte
Berendt, Leyh & Hering
Innere Wiener Strasse 20
81667 München (DE)

(54) **A transparent substrate having a function of liquid detection**

(57) In a transparent substrate having a function of optically detecting liquid without using prisms, diffraction gratings (2 and 3) are formed on the surface of the glass (1) at an interior side thereof, and a light emitting element (4) and a light receiving element (5) are positioned in the vicinity of the diffraction gratings (2 and 3), respectively. When water is attached at a total reflection point on the surface of the glass (1), a light propagating to the diffraction gratings (3) is reduced, and if the water covers the total reflection point as a whole, it reduces down to one fiftieth (1/50). Namely, it can detect the existence of water on the glass surface with high sensitivity and reflect in the strength of the ejected light.

Fig- 3

(a)

EP 0 866 330 A2

## Description

The present invention relates to a transparent substrate having a function of detecting existence of liquid such as rain drops, number of such liquid drops per unit of area and amount thereof with high accuracy.

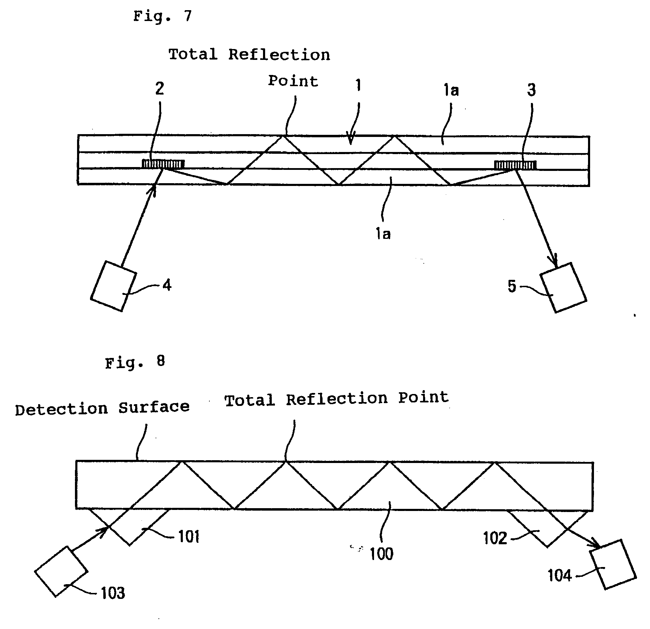

Conventionally, there has been attempted to operate a wiper automatically by detecting rain drops attached on a front glass or a window of an automobile, and as an example of a transparent substrate of such type, there is already known a construction as shown in Fig. 8.

Namely, on a surface of the transparent substrate 100 of glass plate, etc., prisms 101 and 102 are adhered, and a light beam emitted from a light source 103 is introduced through the prism 101 into the transparent substrate 100 with an angel of total internal reflection of the light. Then, an incident angle is so set that no such total internal reflection occurs if there is existing the liquid such as water on the surface of the transparent substrate 100, since the quantity of light of the total internal reflection changes depending on the existence of liquid at the point of the total internal reflection on the glass surface, therefore the existence of liquid can be sensed by detecting an amount of the change with such a light receiving element 104, etc.

In JP-A- Sho 60-216245 (1985), there is disclosed a detection method in which the light from the light source is totally reflected by the glass plate and is entered into the light receiving element through the prism, which is inferior in sensitivity. Therefor the angle of the prism is so set that the reflection light from the said rain drops enters into the light receiving elements only when they attach on the glass surface.

Further, in JP-A- Sho 62-163949 (1987), there is disclosed a construction in which two light sources are prepared, the incident angle at a detecting surface of one of which is greater than a critical angle of the total reflection and that of the other of which is less than the critical angle of the total reflection, thereby discriminating between the attachment of water and the others.

Moreover, in JP-A- Hei 8-261974 (1996), there is disclosed a construction in which transparent electrodes in shape of a comb teeth are provided inside of the glass plate, detecting a change in the electrostatic capacity between the transparent electrodes of the comb teeth shape, which is caused by the rain drops attaching on the glass plate surface, thereby controlling opening-closing of the windows and a heater depending thereon.

However, with those having the optical detecting function mentioned in the above, the prisms are necessary for introducing the total reflection light into the glass and those prisms must be closely stuck or adhered onto the glass surface, therefore spending time and effort in work of assembling thereof. In particular, almost of such a window shield glass of the automobile is designed of being curved, therefore, it is difficult to closely stick them on it.

Further, for inhibiting from an unnecessary reflection in a boundary surface between the prism and the glass surface, the refractive indexes must be adjusted to approach to each other as far as possible (i.e., index matching). For that purpose, there can be considered that a matching layer be provided, however, it increases the number of processing or steps and causes a disadvantage from a view point of cost.

While the method as shown in JP-A-Hei 8-261974 (1996), in which the rain drops attaching on the glass plate are detected by the changes in the electric resistance or the electrostatic capacity, etc., is inferior in durability and sensitivity, in particular, when applying it to the front glass of the automobile, it is important that the signal must follow visibility of a driver and a fellow passenger riding together, in that sense, the optical one being preferable.

For dissolving the problems mentioned in the above, in accordance with the present invention, there is provided a transparent substrate having a function of liquid detection, comprising:

light generating means for generating a light beam;
light receiving means for receiving the light beam; and
a transparent substrate, wherein said transparent substrate further comprises:
a first diffraction grating for introducing the light beam generated from said light generating means into an inside of said transparent substrate and for refracting or penetrating the introduced light beam at such an angle that it causes total reflection within said transparent substrate; and
a second diffraction grating for outputting the light beam reflected by the total reflection within said transparent substrate to said light receiving means.

As the light generating means, a LD or a LED (light emitting diode) is appropriate. Further, as the transparent substrate, a glass plate such as the wind shield glass of an automobile or a train, or the window glass of a building can be considered, and it can be a so-called laminated glass. In case of the laminated glass, it is preferable that on the surface of one piece of glasses constituting the laminated glass is formed with the diffraction gratings so that the diffraction gratings are located inside the laminated glass in the condition of piling up the plural pieces of glass plates.

Further, the diffraction gratings which are made of resin, etc., also can be inserted between the transparent plates, such as the glass plates.

Further, the diffraction grating as a principal structural element is an optical element, which can be made by forming minute gutters on a surface of the glass plate. Mainly, it is designed with a pitch of the gutters within the range from 0.4 to 3 $\mu$m, and is applied differently for various uses. The main use of the diffraction grating is for spectrum separation, however, in case that it is used with a monochromatic light source, it can be used for dividing or bending the light by the refraction effect of light.

Further, as the diffraction grating, others than that mentioned in the above also can be applied, such as a diffraction grating of reflection type, a diffraction grating in a slit shape, and a diffraction grating, the refraction index of which changes periodically.

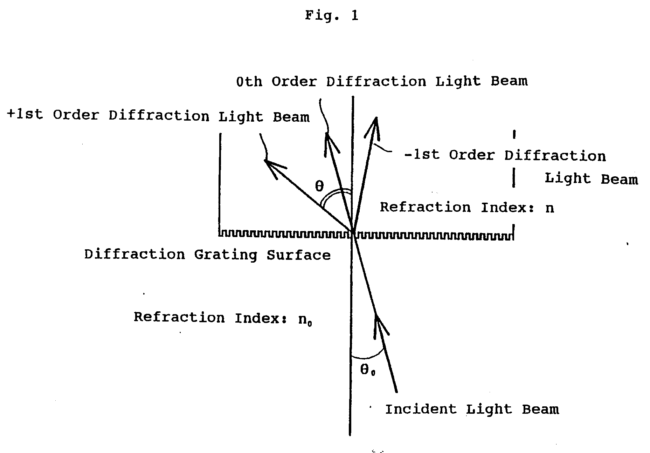

An effect that is used in the present invention is in a phenomenon that the diffraction lights appear on the basis of a predetermined rule in the case that the monochromatic light is incident on the diffraction grating. The primary or 1st order diffraction light appears at a predetermined angle with respect to the incident light, as shown in Fig. 1. Also diffraction lights of higher orders appear, but they are small in quantity of light, therefore the primary diffraction light is mainly used.

When the incident light penetrates, an angular relationship established between the incident light and the diffraction light is expressed by the following equation. Namely, assuming that the angle of the incident light is $\theta_0$, the angle of M-th order $\theta$, a wave length of the incident light $\lambda$, the pitch of gutters d, the refraction index at an ejection side n, the refraction index of medium at the incident side $n_0$, then, the angle can be determined as follows:

$$n \cdot \sin \theta - n_0 \cdot \sin \theta_0 = m\lambda/d \ (m=0, \pm1, \pm2, ...) \quad (1)$$

In case that the medium at the incident side is air and that at the ejection side the transparent plate, $n_0$ is 1.0 ($n_0$ = 1.0), therefore, the angle of light penetrating through the transparent plate can be adjusted by changing the angle of light incident on the diffraction grating.

As mentioned in the above, by using the diffraction grating, it is possible to introduce the light into the transparent plate at an arbitrary angle. Further, by selecting the incident angle onto the diffraction grating appropriately, it is also possible to set such that the introduced light causes the total reflection within the transparent plate.

Further, it is also possible to let the light penetrating through the transparent plate by the total reflection eject from the transparent plate into the air on the same principle.

Here, a general manufacturing method of the diffraction grating will be described. The diffraction grating which has been known conventionally is obtained by a transcription of a master disc onto an epoxy resin painted or pasted on the surface of the transparent plate, such as the glass, which disc is manufactured by precisely cutting the gutters on a soft metal, such as aluminum.

Alternately, the minute or microscopic gutters can be realized by making exposure with an interference between two light beams on light sensitive resin painted on the transparent plate, such as the glass, to be etched on the exposed or non-exposed portions.

The diffraction grating made by such the manufacturing method as mentioned in the above can be applied to the present invention, however, it is questionable to apply the diffraction grating made by the transcription on the epoxy resin or the diffraction grating formed on the light sensitive resin to the use in which weather resistance or durability and mechanical strength are required. Furthermore, when trying to apply it to the window glass of large size and the wind shield glass, application of such the transcription technology and the exposure technology as mentioned in the above will cause a difficulty and is not appropriate nor adequate from a practical view point.

Therefore, in accordance with the present invention, there is also provided a technology for forming the diffraction grating directly on the transparent substrate, such as the glass plate etc., with a manufacturing method using a laser. Namely, it is possible to manufacture the diffraction grating by using of the ablation phenomenon under which the glass surface is partially evaporated with the laser beam.

The ablation phenomenon is a phenomenon which is caused in the glass absorbing the laser beam energy. The glass substrate is made containing the silver in the form of Ag atom, Ag colloid or Ag ion until a predetermined depth from the surface thereof, and further it has the surface to be processed with the laser beam at which the density of the silver is highest, as well as a slope in the silver density gradually decreasing down to the predetermined depth. Then, the ablation occurs from the surface layer toward inside in succession, therefore, hardly causing breaks, cracks or fragments therein.

For introducing the silver onto the surface of the glass substrate, there are following methods:

(1) A method, in which the glass substrate containing monovalent alkaline ion therein is dipped into molten salt containing Ag ion so as to achieve an ion exchange.
(2) A method, in which mixture of salt containing silver such as silver nitrate and talc or paste-like silver powder is painted on the surface of the glass substrate and then it is heated.

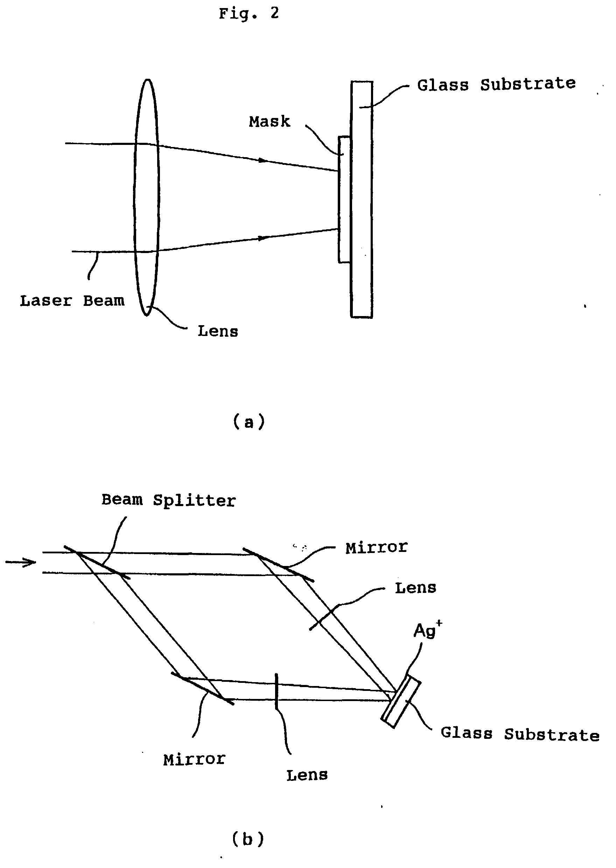

As the laser beam mentioned, a laser beam having a periodicity same to the distance or pitch of the gutters of the purpose is used so as to form the minute or fine gutters directly on the glass surface. As a method for obtaining a laser beam having a periodical strength distribution, as shown in Fig. 2, there is an applicable way in which a mask is provided and the laser beam is radiated on the mask through an optical lens, or an another way in which the laser beam is divided into two beams and then they are overlapped or combined together again at a certain angle to form the periodical strength distribution in the overlapped portion of them, as shown in Fig. 2 (b).

BRIEF DESCRIPTION OF THE DRAWINGS

Fig. 1 explains a function of a diffraction grating;

Figs. 2 (a) and (b) show an example of a manufacturing method of the diffraction grating;

Fig. 3 (a) and (b) show a perspective view of a front portion of an automobile to which a transparent substrate in accordance with the present invention is applied.

Fig. 4 (a) and (b) show an arrangement of a light emitting means and a light receiving means;

Fig. 5 shows an another embodiment in the same manner as in Fig. 4;

Fig. 6 shows a further another embodiment in the same manner as in Fig. 4;

Fig. 7 shows a further another embodiment in the same manner as in Fig. 4; and

Fig. 8 shows a construction of an example of the conventional art.

Hereinafter, detailed explanation of the embodiments according to the present invention and comparisons will be given by referring to the attached drawings.

(Embodiment 1)

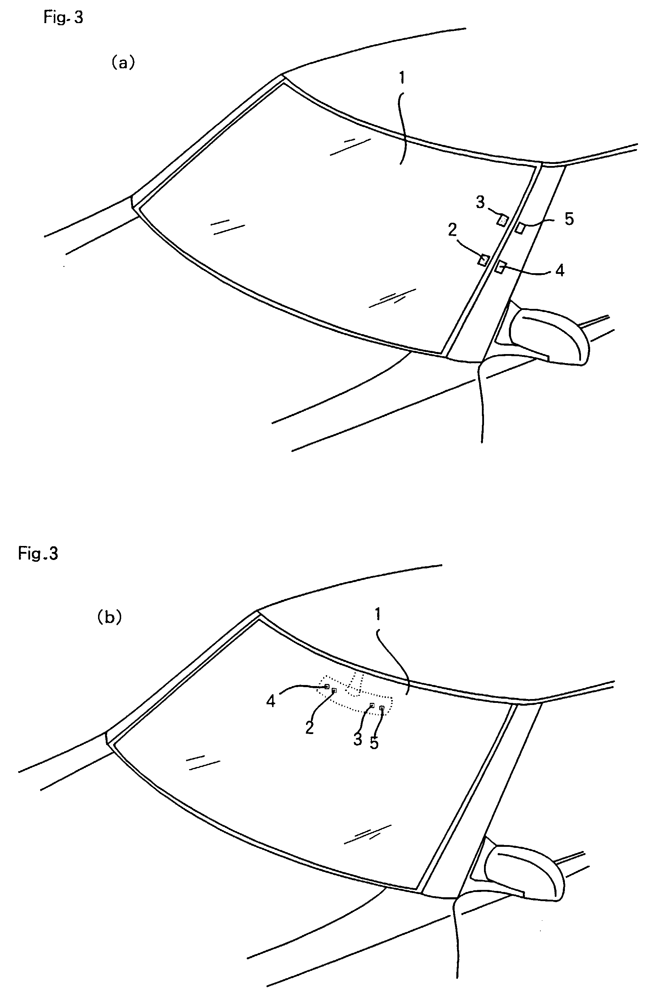

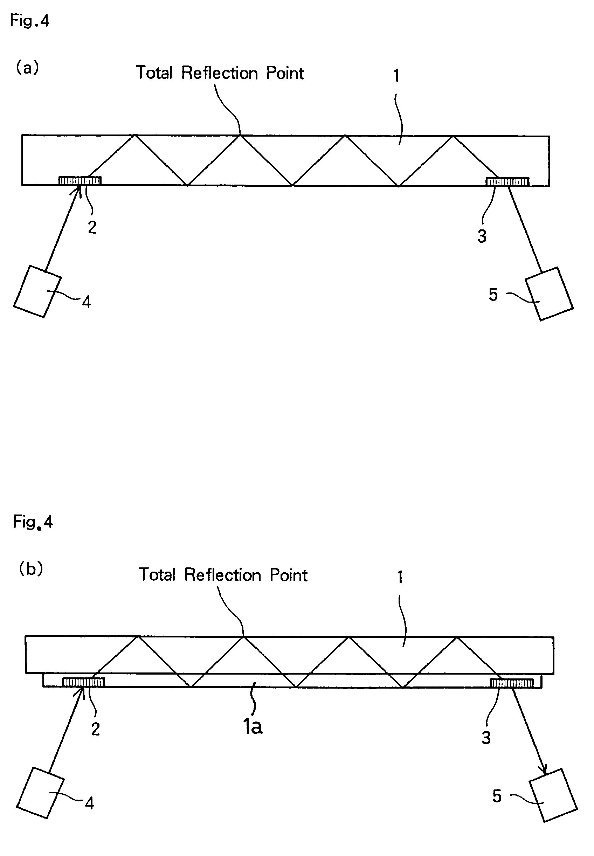

Fig. 3 (a) and (b) show a perspective view of a front portion of an automobile to which is applied a transparent substrate relating to the present invention, and Fig. 4 (a) and (b) show an example of arrangement or positioning of a light emitting means and a light receiving means, wherein diffraction gratings 2 and 3 are formed on an interior side surface of a front glass 1, and the light emitting element 4 and the light deceiving element 5 are positioned in the vicinity of the diffraction gratings 2 and 3, respectively.

The positions of diffraction gratings 2 and 3 may be near by a pillar as shown in Fig. 3 (a) or on the hidden side of the rearview mirror as shown in Fig. 3 (b), also diffraction gratings 2 and 3 are directly formed in a front glass 1 as shown in Fig. 4 (a) or formed in a sheet plastic plate or glass plate 1a and adhered onto the front glass 1 as shown in Fig. 4 (b).

As the front glass mentioned above is used a soda lime glass substrate which has $SiO_2$ for its main ingredient in general. This glass substrate has a refraction index of 1.48 and has a thickness of 5 mm.

The diffraction grating is formed by radiating the laser beam on the surface of the glass substrate. In that case, for obtaining a good machinability by the laser beam, the introducing of silver is done on the portions to be processed. In the present embodiment, the ion exchange method is used among the methods mentioned in the above.

Ag ion exchanging process is carried out by the following steps. A mixture of silver nitrate and sodium nitrate at a rate of 50 mol%-50 mol% is used as the molten salt for Ag ion exchange, and the glass substrate is dipped in it in a reacting vessel or container of quartz glass for 30 minutes. The temperature of the molten salt is kept at 285 °C in an electric furnace, and an atmosphere of reaction is air. With this process, $Na^+$ ion dissolves out of the glass surface, while $Ag^+$ ion contained in the salt diffuses inside from the glass surface (i.e., the ion exchange occurs). Measuring the thickness of the layer in which Ag diffuses by a X-ray micro analyzer, it is 10 $\mu m$. The glass substrate manufactured in this manner has a good machinability by the laser beam.

Next, in the process by a laser beam having a periodic strength distribution, an interference between two laser beams which is shown in Fig. 2 (b) is utilized.

Namely, in the present embodiment, an optical system is so constructed that those two laser beams of wave-length 355 nm come across at an incident angle 20°. In this case, the period of the light strength distribution is 1020 nm. The glass substrate is set in such manner that one of the surfaces of it is located at the overlapped portion of those two laser beams, and the ablation occurs on the glass substrate surface by radiating the laser beam on it.

A lens in Fig. 2 (b) is used for increasing energy density on the surface of the glass substrate, and the energy density per a pulse is about 30 $J/cm^2$ when the ablation occurs. Measuring the period of the manufactured diffraction grating, it nearly coincides with the period expected.

For achieving such the arrangement shown in Fig. 4, two diffraction gratings are made. Further, in the present embodiment, since it is so constructed that the reflection occurs one time and the diffraction light causing the total reflection one time goes out from the other diffraction grating, those diffraction gratings are manufactured being separated by a distance about 9.7 mm in the direction of the diffraction. Furthermore, each of the diffraction gratings has a circle shape and has a diameter of about 5 mm.

For obtaining the angle at which the total reflection occurs on the boundary surface between the air and the glass, the following calculation is done by using the Snell's law of reflection. A general equation of the Snell's law of reflection is expressed as described below by the equation (2).

Where, $\alpha_n$ and $\alpha_0$ are angles defined with respect to a normal line at the boundary surface between a material of refraction index n and a material of refracting index $n_0$.

$$n_0 \cdot \sin\alpha_0 = n \cdot \sin\alpha_n \qquad (2)$$

Assuming that the refraction index of the glass is n = 1.48 and that of the air is $n_0$ = 1, since a condition for the total reflection in the inside of the glass plate is $\alpha_n$= 90°, then $\alpha$ = 42.5° can be obtained. Consequently, if it is greater than the angle, the total reflection occurs within the medium of the glass.

On the other hand, in case that water is adhering or attaching on it, the condition for occurring the total reflection in the inside of the glass is 64.0°, assuming that the refraction index of water is n = 1.33 and calculating in the same manner. Consequently, in a range of angle from 42.5° to 64.0°, the total reflection occurs in the inside of the glass when no water is attached on the surface, while it does not occur when the water is attached on the surface thereof, i.e., the inside light beam goes out through the water.

For causing such the reflection, the incident angle of the diffraction grating is adjusted. The incident angle of the diffraction grating is calculated by using the above-mentioned equation (1) for making the reflection angle in the inside of the glass at 42.5°. When the diffraction grating is formed on the glass surface with the period 1020 nm and a primary (+ 1st) diffraction light beam of 633 nm from a He-Ne laser is used, it is calculated to be 22°. For making the reflection angle in the inside of the glass at 64.0°, from the similar calculation, it is apparent that the incident angle of the diffraction grating should be 45°. In the present embodiment, first of all, the light beam is introduced at an angle 25°. In this case, the light beam causing the total reflection goes out from the other diffraction grating provided separately.

Further, when the water is adhered or attached at the point of the total reflection, the light beam going outside or outputted decreases in the quantity, and in particular in the case that the water is attached over the total reflection point as a whole, the output light decreases down to as small as one-fiftieth (1/50) thereof. Namely, it can be seen that it can detect the existence of water on the glass surface with high sensitivity and reflect it in the light beam strength outputted. Further, by increasing the incident angle of the diffraction grating gradually, a similar phenomenon occurs as mentioned in the above.

However, if the incident angle of the diffraction grating comes to be greater than 64°, even if water is attached at the total reflection point, no change appears in the quantity of light outputted. This corresponds to the angle at which the inside total reflection condition does not change even if water is attached on the surface of the glass plate.

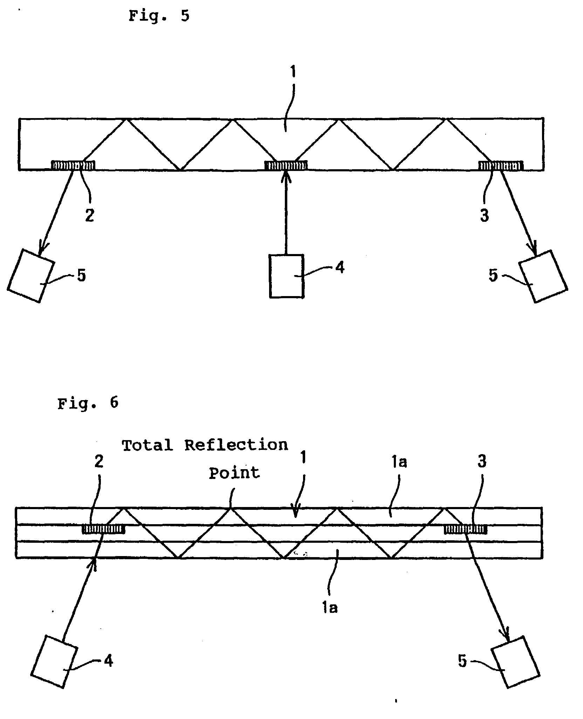

Figs. 5, 6 and 7 show other embodiments in the same manner as in Fig. 4, wherein the light emitting element 4 is positioned at about a center of the glass substrate 1 and the light receiving elements 5 are in the vicinity of the both side thereof, in the embodiment shown in Fig. 5.

Further, in the embodiment shown in Fig. 6, the glass substrate 1 is constructed as a laminated glass piling a plurality of glass plates 1a, and the diffraction gratings 2 and 3 are provided between those glass plates 1a, i.e., on the surface of a predetermined glass plate 1a, so as not to be injured.

In the present embodiment, the input and output of the light beam is accomplished at a side of one surface of the transparent substrate, however, it is also possible that the input is done at an edge of the glass and the light receiving is achieved through the diffraction grating, or, that the input is done with the diffraction grating and the light receiving with an edge surface of the glass.

Further, in the embodiment shown in Fig. 7, the glass substrate 1 is constructed as a laminated glass piling a plurality of glass plates 1a, in the same manner of the embodiment as mentioned in Fig. 6, however, the diffraction gratings 2 and 3 positioned inside are not a penetration type but a reflection type.

Further, by using the plus and minus primary (± 1st) diffraction lights generated from the diffraction grating at the same time, it is also possible to increase the area for detection. Furthermore, by introducing the light which has a cross section same to the area of the diffraction grating, this also increases the area for the total reflection so as to increase the sensitivity of measurement.

Further, in those embodiments, there is disclosed an operation of the one element mainly from a view point of a principal thereof, however, it is needless to say that the sensitivity can be improved as well as measurement of an amount of liquid and a density of rain drops per unitary area can be achieved with high accuracy. Further, the incident angle changes depending on the difference in liquid to be detected and diffraction gratings manufactured, however,it can be dealt with the methods disclosed in the present embodiment, variously.

Furthermore, the diffraction grating is not only formed on the glass in itself, but it also can be formed in a sheet shape and adhered on the glass substrate, etc.

As is fully explained in the above, in accordance with the present invention, in the transparent substrate having a function of detecting attachment of rain drops with the change in quantity of the reflected light, the diffraction grating is used for introducing the light into the transparent substrate and as a means for changing an angle of the light to cause the total reflection within the substrate, then such prisms conventionally used can be eliminated.

Therefore, all of such the problems, the stickiness, the weather resistance of the adhesive, and the adjustment in the refraction indexes between the prism and the adhesive or between the adhesive and the glass, which accompany with the conventional arts when the prisms are adhered on the glass surface, can be dissolved.

Further, by using the laser processing in the forming of the diffraction grating, then the process itself becomes easy. Therefore, it is possible to form the diffraction grating directly on a portion of the glass plate surface of large size, such as the front glass for use in the automobile.

Moreover, by introducing the silver into the surface of glass substrate, the ablation phenomenon occurs from the surface layer thereof, thereby improving the machinability of the glass substrate.

**Claims**

1. A transparent substrate having a function of liquid detection, comprising:

   light generating means (4) for generating a light beam;
   light receiving means (5) for receiving the light beam; and
   a transparent substrate (1), wherein said transparent substrate further comprises:
   a first diffraction grating (2) for introducing the light generated from said light generating means (4) into an inside of said transparent substrate (1) and for refracting or penetrating the introduced light beam at such an angle that it causes total reflection within said transparent substrate (1); and
   a second diffraction grating (3) for outputting the light beam reflected by the total reflection within said transparent substrate (1) to said light receiving means (5).

2. A transparent substrate having a function of liquid detection as claimed in Claim 1, wherein said transparent substrate (1) is a glass substrate, and said diffraction gratings (2, 3) are directly formed on said glass substrate surface by an ablation phenomenon caused by irradiating a laser light.

3. A transparent substrate having a function of liquid detection as claimed in Claim 2, wherein silver is contained at a surface side of said glass substrate (1), on which said diffraction gratings (2, 3) are formed, in a form of Ag atom, Ag colloid or Ag ion, and with such a density that it decreases gradually until a predetermined depth from the surface of said glass substrate (1).

4. A transparent substrate having a function of liquid detection as claimed in any of preceding claims, wherein each of said diffraction gratings (2, 3) is directly formed in said transparent substrate (1).

5. A transparent substrate having a function of liquid detection as claimed in any of preceding claims, wherein each of said diffraction gratings (2, 3) is formed in a transparent plate and adhered onto one side surface of said transparent substrate (1).

6. A transparent substrate having a function of liquid detection as claimed in any of preceding claims, wherein each of said diffraction gratings (2, 3) is formed in a sheet and adhered onto one side surface of said transparent substrate (1).

7. A transparent substrate having a function of liquid detection as claimed in any of Claims 1 through 4, wherein said transparent substrate (1) is constructed by piling plural pieces of layers of transparent body, and said diffracting gratings (2, 3) are provided between the piled transparent body layers.

Fig. 1

0th Order Diffraction Light Beam

+1st Order Diffraction Light Beam

-1st Order Diffraction Light Beam

Refraction Index: n

$\theta$

Diffraction Grating Surface

Refraction Index: $n_0$

$\theta_0$

Incident Light Beam

Fig. 2

Glass Substrate

Mask

Laser Beam

Lens

(a)

Beam Splitter

Mirror

Lens

Ag$^+$

Mirror

Glass Substrate

Lens

(b)

Fig. 3

(a)

Fig. 3

(b)

Fig.4

(a)

Total Reflection Point    1

2

3

4

5

Fig.4

(b)

Total Reflection Point    1

2    1a    3

4    5

Fig. 5

Fig. 6

Total Reflection
Point

Fig. 7

Total Reflection
Point

2     1     1a     3

1a

4

5

Fig. 8

Detection Surface    Total Reflection Point

101

100

102

103

104